(19) Europäisches Patentamt

European Patent Office

Office européen des brevets

(11) Publication number: 0 268 906
A2

# (12) EUROPEAN PATENT APPLICATION

(21) Application number: 87116432.3

(22) Date of filing: 06.11.87

(51) Int. Cl.⁴: C08G 18/66 , C08G 18/32

(30) Priority: 26.11.86 US 935356

(43) Date of publication of application:
01.06.88 Bulletin 88/22

(84) Designated Contracting States:
DE ES FR GB IT NL SE

(71) Applicant: THE DOW CHEMICAL COMPANY
2030 Dow Center Abbott Road P.O. Box 1967
Midland, MI 48640(US)

(72) Inventor: Carswell, Robert
306 Narcissus
Lake Jackson Texas 77566(US)

(74) Representative: Huber, Bernhard, Dipl.-Chem.
et al
Möhlstrasse 22 Postfach 860 820
D-8000 München 86(DE)

(54) Compatibilized blends of alpha, omega-alkylene glycols and polyether polyols and process for preparing the same.

(57) This invention relates to stabilizers for normally incompatible blends of polyether polyols and alkylene glycol chain extender which are selected from: (a) unsubstituted or ether-substituted aliphatic or cycloaliphatic primary mono-amine compounds containing from about 4 to about 8 carbon atoms; (b) unsubstituted or ether-substituted aliphatic or cycloaliphatic secondary mono-amine compounds containing from about 6 to about 12 carbon atoms; (c) alkyl diethanol amines in which the alkyl group contains from about 2 to about 8 carbon atoms; (d) dialkyl hydroxyl amines containing about 4 to about 10 carbon atoms; (e) trialkylamines in which each alkyl group has from about 2 to about 4 carbon atoms and (f) diethanolamine.

This invention also relates to a polyurethane polymer which is a reaction product of a polyisocyanate and a polyether-alkylene glycol chain extender blend which blend is stabilized with the stabilizer described previously.

EP 0 268 906 A2

## COMPATIBILIZED BLENDS OF α,ω-ALKYLENE GLYCOLS AND POLYETHER POLYOLS AND PROCESS FOR PREPARING THE SAME

This invention relates to blends of a polyether polyol and an α,ω-alkylene glycol containing a compatibilizing agent.

In making polyurethane elastomers, particularly via a reaction injection molding (RIM) process, a mixture of a relatively high equivalent weight polyether and a low equivalent weight chain extender compound are reacted with a polyisocyanate. The polyether and the chain extender are advantageously blended together and simultaneously reacted with the polyisocyanate.

For several reasons, it is important that the mixture of the polyether and chain extender be as homogeneous as possible. It is the preferred practice to ship and store the blended polyether and chain extender. Phase separation of its components requires that the blend be made and immediately used, or maintained in constantly stirred storage vessels. Phase separation also causes different portions of the blend to have different compositions. Accordingly, parts prepared from different portions of the blend will have different properties. Many of these parts will, of course, be out of specification.

Alkylene glycol chain extenders are well known to be incompatible with polyether polyols in amounts such as are required in elastomer applications. For this reason, it has been required to blend the polyether with the alkylene glycol just prior to use, or to employ some additional component which compatibilizes the alkylene glycol with the polyether. Among the compounds previously employed for this purpose are phenylenediethanolamine, urea and substituted ureas.

Several characteristics are desirable in the compatibilizer. It should be a liquid so it is easily blended with the other components. It is preferably effective at relatively low concentrations in order to minimize the cost. The compatibilizer also should have minimal undesirable effect on the properties of the polyurethane prepared from the compatibilized polyether-chain extender blend.

Accordingly, it would be desirable to provide a compatibilized polyether-chain extender blend containing such a compatibilizer.

This invention is a compatibilized polyether-alkylene glycol blend comprising a relatively high equivalent weight polyether polyol, an α,ω-alkylene glycol which is incompatible with the polyether polyol at the relative proportions thereof present in the blend in the absence of a compatibilizer, and a compatibilizing amount of an amine compatibilizing agent selected from the group consisting of:

(a) unsubstituted or ether-substituted aliphatic or cycloaliphatic primary mono-amine compounds containing from 4 to 8 carbon atoms;

(b) unsubstituted or ether-substituted aliphatic or cycloaliphatic secondary mono-amine compounds containing from 6 to 12 carbon atoms;

(c) alkyl diethanol amines in which the alkyl group contains from 2 to 8 carbon atoms;

(d) dialkyl hydroxyl amines in which each alkyl group contains from 2 to 5 carbon atoms, and

(e) trialkylamines in which each alkyl group contains from 2 to 4 carbon atoms.

This invention also relates to a process for preparing a compatibilized polyether-alkylene glycol blend which comprises admixing a relatively high equivalent weight polyether polyol, an α,ω-alkylene glycol which is incompatible with the polyether polyol at the relative proportions thereof present in the blend, and a compatibilizing amount of the amine compatibilizing agent described previously.

The compatibilized blend of this invention can be stored for extended periods of time without significant separation of its components. In addition, the blend reacts readily with a polyisocyanate to form a polyurethane polymer.

One component of the blend of this invention is a relatively high equivalent weight polyether polyol. The polyether advantageously has an equivalent weight of from 500 to 5000, preferably from 700 to 3000, and more preferably from 1000 to 2000. It also advantageously contains an average of from 1.8 to 4, preferably 2 to 3, hydroxyl groups per molecule. The polyether is advantageously a polymer of a $C_2$-$C_8$ cyclic ether such as, for example, ethylene oxide, propylene oxide, butylene oxide, styrene oxide and tetrahydrofuran. Polymers of ethylene oxide and/or propylene oxide are preferred. Especially preferred are di-and trifunctional poly(propylene oxide) polymers which are end-capped with 10-25 weight percent, based on the total weight of the polyether, of ethylene oxide. Mixtures of the difunctional and trifunctional polyols may be used if desired.

The blend contains as a chain extender an α,ω-alkylene glycol which is incompatible, in the absence of a compatibilizer, with the polyether at the relative proportions thereof present in the blend. Suitable such alkylene glycols include those having from 2 to 8, preferably 2 to 6, more preferably 2 to 4 carbon atoms. Exemplary such chain extenders include ethylene glycol, 1,4-butanediol, 1,6-hexamethylene glycol and 1,8-

2

octanediol. Ethylene glycol and 1,4-butanediol are most preferred.

Although the blend can contain any amount of chain extender at which the chain extender and polyether are incompatible in the absence of a stabilizer, the blend preferably contains from 5 to 60, more preferably from 10 to 40 parts by weight of chain extender per 100 parts by weight of polyether. It has been found that polyurethanes having particularly desirable properties may be prepared from blends containing an amount of chain extender within the preferred and more preferred ranges.

In addition to the polyether and chain extender, the composition further contains a stabilizer as described following. The stabilizer is present in an amount sufficient to improve the solubility of the chain extender in the polyether. Preferably, the stabilizer is present in an amount that a blend comprising the polyether, chain extender and stabilizer does not significantly phase-segregate upon standing at room temperature for at least 7 days, more preferably at least 14 days, and most preferably at least 28 days. By "does not significantly phase-segregate", it is meant that the mixture does not separate into a plurality of layers. Although it is preferred that the stabilized blend be clear, a cloudy or milky blend is not considered to be phase-separated unless distinct, layered phases are evident.

Preferably, from 0.1 to 4, more preferably from 0.2 to 1 part of stabilizer is used per part of chain extender. Most preferably, the blend contains from 1 to 20 parts of the stabilizer per 100 parts of polyether.

The stabilizer is an amine-containing compound selected from the group consisting of

(a) unsubstituted or ether-substituted aliphatic or cycloaliphatic primary mono-amine compounds containing from 4 to 8 carbon atoms;

(b) unsubstituted or ether-substituted aliphatic or cycloaliphatic secondary mono-amine compounds containing from 6 to 12 carbon atoms;

(c) alkyl diethanol amines in which the alkyl group contains from 2 to 8 carbon atoms;

(d) dialkyl hydroxyl amines containing from 4 to 10 carbon atoms;

(e) trialkylamines in which each alkyl group has from 2 to 4 carbon atoms, and

(f) diethanolamine.

Exemplary stabilizers corresponding to subgroup (a) include n-butylamine, amylamine, n-hexylamine, n-octylamine, sec-butylamine, 1-amino-2-ethoxyethane, 1-amino-1-methyl hexane and cyclohexylamine.

Exemplary stabilizers corresponding to subgroup (b) include di-n-propylamine, ethylpropylamine, di-n-butylamine, di-n-hexylamine and di-sec-butylamine.

Exemplary stabilizers corresponding to subgroup (c) include ethyldiethanolamine, n-propyldiethanolamine, n-butyldiethanolamine and n-hexyldiethanolamine.

Exemplary stabilizers corresponding to subgroup (d) include diethylhydroxylamine, di-n-propylhydroxylamine and di-n-butylhydroxylamine.

Exemplary stabilizers corresponding to subgroup (e) include triethylamine, tri(n-propyl)amine, tri(n-butyl)amine and ethyl di(n-propyl)amine.

Of these stabilizers, the unsubstituted or ether-substituted aliphatic or cycloaliphatic primary mono-amine compounds containing from 4 to 8 carbon atoms are preferred. Most preferred are amylamine, sec-butylamine, 2-ethoxyethylamine and cyclohexylamine.

The composition of this invention can be prepared by simple blending of the polyether, chain extender and stabilizer. Preferably, the stabilizer is first blended with either the polyether or the chain extender prior to mixing the chain extender with the polyether. Following blending of all components, it is preferred to heat the mixture to 35-70°C for a short period, i.e. 5 minutes to 3 hours. Such heating often improves the mixing and provides a stabilized composition of greater clarity.

In addition to the foregoing critical components, other additives which are useful in preparing polyurethanes may be present in the stabilized composition. Among these additives are catalysts, blowing agents, surfactants, mold release agents, crosslinkers, antioxidants, preservatives, colorants, particulate fillers, reinforcing fibers and antistatic agents.

One preferred component is a catalyst for the reaction of the polyisocyanate with the various active hydrogen-containing materials in the active hydrogen-containing composition. Suitable catalysts include organometallic compounds and tertiary amine compounds. Of the organometallic catalysts, organotin catalysts such as dimethyltindilaurate, dibutyltindilaurate and stannous octoate are preferred. Other useful organometallic catalyst are disclosed, for example, in U.S. Patent No. 2,846,408. These include organolead, organomercury, organobismuth and organoiron compounds. Suitable tertiary amine compounds include triethylenediamine, N-methyl morpholine, N-ethyl morpholine, diethylethanolamine, N-coco morpholine, 1-methyl-4-dimethylaminoethyl piperazine, 3-methoxy-N-dimethylpropylamine, N,N-diethyl-3-diethylaminopropylamine and dimethylbenzyl amine. Mixtures of tertiary amine and organotin catalysts are also useful. Advantageously, from 0.01 to 0.5 parts by weight of an organometallic catalyst and/or from 0.05 to 2 parts of a tertiary amine catalyst are used per 100 parts of relatively high equivalent weight polyol.

Suitable blowing agents, which are optionally employed herein, include water, halogenated methanes such as methylene chloride, dichlorodifluoromethane, trifluoromonochloromethane and the so-called "azo" blowing agents. However, in preparing noncellular or microcellular polyurethanes, for which this invention is especially adapted, the use of these blowing agents is not preferred. In making microcellular polyurethanes having a density of from 0.85 (850) to 1.25 g/cc (1250 kg/m³), it is preferred to reduce density by dissolving or dispersing a gas such as air or nitrogen into the stabilized blend prior to its reaction with a polyisocyanate.

Suitable surfactants include silicone surfactants and fatty acid salts, with the silicone surfactants being much more preferred. Such surfactants are advantageously employed in an amount of from 0.01 to 2 parts per 100 parts by weight polyether.

A particularly useful mold release agent is a mixture of a primary, secondary or tertiary amine containing compound and a metal salt of a fatty acid such as zinc stearate. Optionally, a free acid such as oleoyl sarcosine is included in the mold release agent. Those of the stabilizers which contain primary or secondary amine groups will also satisfy the requirement for a primary, secondary or tertiary amine-containing compound. However, the preferred primary, secondary or tertiary amine-containing compound is an amine-terminated polyether having 400-2000 molecular weight. Such internal mold release agents are described in the copending application of Meyer et al. filed January 12, 1984, serial no. 570,141.

Suitable fillers and colorants include calcium carbonate, alumina trihydrate, carbon black, titanium dioxide, iron oxide, flaked or milled glass. Suitable fibers include glass fibers, polyester fibers, graphite fibers and metallic fibers.

The stabilized composition of this invention is reacted with a polyisocyanate to form a polyurethane. Both aliphatic and aromatic diisocyanates are useful for this purpose. Suitable aromatic diisocyanates include, for example, m-phenylene diisocyanate, p-phenylene diisocyanate, 2,4-and/or 2,6-toluene diisocyanate (TDI), naphthylene-1,5-diisocyanate, 1-methoxyphenyl-2,4-diisocyanate, 4-4'-biphenylenediisocyanate, 3,3'-dimethoxy-4,4'-biphenyldiisocyanate, 2,4'-and/or 4,4'-diphenyl-methanediisocyanate (MDI) and derivatives thereof. Preferred among the aromatic polyisocyanates are the isomers and derivatives of TDI and MDI.

Exemplary aliphatic polyisocyanates include isophorone diisocyanate, cyclohexane diisocyanate, hydrogenated diphenylmethanediisocyanate (H₁₂MDI) and 1,6-hexamethylenediisocyanate. Of these, hexamethylenediisocyanate and H₁₂MDI are most preferred.

Biuret, urethane, urea, uretonimine and/or carbodiimide containing derivatives, including prepolymers, of the foregoing polyisocyanates are also suitable.

In preparing the polyurethane, the polyisocyanate is employed in an amount to provide from 0.9 to 1.5, preferably from 1.0 to 1.25, more preferably from 1.0 to 1.05, isocyanate groups per active hydrogen-containing group present in the reaction mixture. Lesser amounts of polyisocyanate produce an inadequately cured polymer whereas greater amounts thereof tend to form undesirable crosslinking.

The stabilized composition is advantageously reacted with the polyisocyanate by mixing same and introducing the mixture into a suitable mold for curing. Conventional casting techniques may be used, wherein the components are mixed and poured into the mold, where they cure upon heating. However, especially when more reactive components are used, it is preferred to conduct the reaction using a reaction injection molding (RIM) process. In such process, the components are subjected to high shear impingement mixing and immediately injected into a closed mold where curing takes place. In either the conventional casting or RIM techniques, in-mold curing takes place at least to an extent that the part retains its shape during demolding and subsequent handling. However, complete curing, i.e., curing to a point at which no additional discernible reaction occurs, may take place either in the mold or in a post-curing step which is conducted after demolding.

The curing of the polyurethane is advantageously conducted at a temperature of from 30 to 150°C for a period of from 1 minute to 24 hours, preferably from 1 minute to 3 hours.

The invention is particularly useful in the preparation of elastomeric polyurethane using a RIM process. Such polyurethanes are often used to prepare automobile parts such as, for example, fascia and molded window gaskets, as well as for non-automotive uses such as beer barrel skirts.

The following examples are provided to illustrate the invention but are not intended to limit the scope thereof. All parts and percentages are by weight unless otherwise indicated.

## Example 1

Various amine compounds were evaluated for their ability to compatibilize a mixture of 20 parts ethylene glycol (EG) and 80 parts of a 5000 molecular weight ethylene oxide-capped poly(propylene oxide) triol (Polyol A). The evaluation was conducted by mixing the EG and polyol A until a cloudy emulsion was obtained. The candidate amine was added to a 100-gram sample of the emulsion at room temperature. In each instance, except for amyl amine, 10 grams of the candidate amine were used. Only 5 grams of amylamine were used. After the amine was added, the bottle was capped and well shaken. If a clear solution was obtained, the bottle was stored at room temperature for observation. If a cloudy mixture was obtained, it was heated to 65°C, and shaken. It was then cooled to room temperature and stored for observation. Observations were made periodically over 28 days to determine long-term stability. The amine compounds tested and the results of the evaluation are as indicated in Table 1 following.

TABLE 1

| Amine | 24 hours | 48 hours | 7 days | 14 days | 28 days |
|---|---|---|---|---|---|
| ethyl-n-butylamine | clear | clear | clear | clear | clear |
| $(C_2H_5)_2NOH$ | cloudy | cloudy | separated | separated | separated |
| di-n-propyl-amine | cloudy | cloudy | cloudy | separated | separated |
| butyl-diethanol-amine | clear | v. sl. cloudy[1] | clear | clear | clear |
| amylamine | clear | clear | clear | clear | clear |
| sec-butyl-amine | clear | clear | clear | clear | clear |
| cyclohexyl-amine | clear | clear | clear | clear | clear |
| 2-ethoxy ethylamine | clear | sl. cloudy[1] | sl. cloudy | sl. cloudy | sl. cloudy |
| tri (n-propyl) amine | cloudy | cloudy | separated | separated | separated |

[1] Sl. cloudy means slightly cloudy. V. sl. cloudy means very slightly cloudy.

As can be seen from the data in Table 1, substantial improvement in the compatibility of the ethylene glycol and Polyol A was achieved with this invention, particularly with the primary amine compounds having from 4 to 6 carbon atoms. In those cases where cloudiness or separation were observed, better compatibilization was achieved by increasing the amount of the amine. Generally, it is preferred to use the least amount of amine necessary to achieve compatibilization, since the amine will catalyze the reaction of the compatibilized mixture with a polyisocyanate.

Example 2

The ability of various amine compounds to stabilize 1,4-butanediol in Polyol A was evaluated according to the procedure described in Example 1. In all cases, the amine was used to compatibilize 20 parts of 1,4-butanediol in 80 grams of Polyol A. Six parts of ethyl-n-butylamine and 10 parts of diethylhydroxylamine and di-n-propylamine were used. Five parts of the other amines were used. The results are as provided in Table 2 following.

TABLE 2

| Amine | 24 hours | 48 hours | 7 days | 14 days | 28 days |
|---|---|---|---|---|---|
| ethyl-n-butylamine | v. sl. cloudy[1] | sl. cloudy[1] | separated | separated | separated |
| $(C_2H_5)_2NOH$ | clear | clear | clear | clear | clear |
| di-n-propyl-amine | clear | clear | clear | clear | clear |
| butyl-diethanol-amine | v. sl. cloudy | v. sl. cloudy | v. sl. cloudy | separated | separated |
| amylamine | clear | clear | clear | clear | clear |
| sec-butyl-amine | clear | clear | clear | clear | clear |
| cyclohexyl-amine | clear | clear | clear | clear | clear |
| 2-ethoxy ethylamine | clear | clear | clear | clear | clear |
| tri(n-propyl)amine | cloudy | cloudy | cloudy | cloudy | separated |

[1] Sl. cloudy means slightly cloudy. V. sl. cloudy means very slightly cloudy.

As can be seen from this data, all of these amines are effective in stabilizing the 1,4-butanediol in Polyol A.

Example 3

A stabilized active hydrogen-containing composition was prepared from the following formulation:
Polyol A        100 parts by weight
Ethylene glycol        30 parts by weight
Monoamylamine        11.5 parts by weight
Zinc Stearate        2 parts by weight
Oleoyl sarcosine        2 parts by weight
In this formulation, the zinc stearate and oleoyl sarcosine were added as internal mold release agents. The monoamylamine functions in this formulation were to compatibilize the ethylene glycol in Polyol A as well as to solubilize the internal mold release agents.
At room temperature, the active hydrogen-containing composition was mixed with sufficient amount of a 168 equivalent weight polymeric diphenylmethanediisocyanate to provide 1.03 isocyanate groups per hydroxyl group (isocyanate index = 103). The mixture reacted rapidly without the application of external heat to form a self-releasing, hard, homogeneous polymer, even though no catalyst was used.

The experiment was repeated, this time using 12 parts cyclohexylamine in place of the monoamylamine. The mixture reacted slightly more slowly with a polyisocyanate, but a hard, self-releasing polymer was again obtained.

## Example 4

The compatibility of ethylene glycol in a mixture of 100 parts of Polyol A and 5 parts bis(aminobenzyl)-aniline (BABA) was evaluated. It was found that whereas 5 parts or 10 parts of ethylene glycol formed clear mixtures therein, 15 parts did not. However, the addition of 4 parts of monoamylamine compatibilized 15 parts of ethylene glycol in the mixture.

The mixtures containing 5 and 10 parts ethylene glycol, when mixed at room temperature with a 168 equivalent weight polymeric MDI, reacted slowly to form a paste, which hardened overnight to form a hard polymer. The compatibilized mixture containing 15 parts ethylene glycol and 4 parts monoamylamine reacted rapidly to form a hard polymer.

## Example 5

An active hydrogen-containing composition suitable for RIM processing was prepared by mixing 93 parts of Polyol A, 7 parts of a 400 molecular weight primary amine-terminated poly(propylene oxide), 20 parts ethylene glycol, 2 parts zinc octoate, 0.1 part of an organotin catalyst, 0.1 part of a 33% solution of triethylenediamine in dipropylene glycol, and 4 parts cyclohexylamine. All components except the cyclohexylamine were blended and heated to 100°F (40°C), at which time the cyclohexylamine was added. The resulting stabilized composition was then reacted with the polyisocyanate described in Example 1 at a 103 index using an Admiral RIM machine. At the time of molding, all components were at 100°F (40°C). The mold was preheated to a temperature of from 155 to 160°F (68 to 70°C). After 1 minute in-mold curing, the parts (12 X 14 inch (305 x 355 mm) flat plaques) were demolded. The parts processed well and had excellent properties.

## Claims

1. A compatibilized polyether-alkylene glycol blend comprising a relatively high equivalent weight polyether polyol, an α,ω-alkylene glycol which is incompatible with the polyether polyol at the relative proportions thereof present in the blend, and a compatibilizing amount of an amine compatibilizing agent selected from the group consisting of:
   (a) unsubstituted or ether-substituted aliphatic or cycloaliphatic primary mono-amine compounds containing from 4 to 8 carbon atoms;
   (b) unsubstituted or ether-substituted aliphatic or cycloaliphatic secondary mono-amine compounds containing from 6 to 12 carbon atoms;
   (c) alkyl diethanol amines in which the alkyl group contains from about 2 to about 8 carbon atoms;
   (d) dialkyl hydroxyl amines in which the alkyl groups each contains from 2 to 5 carbon atoms,
   (e) trialkylamines in which each alkyl group contains from 2 to 4 carbon atoms, and
   (f) diethanolamine.

2. The polyether-alkylene glycol blend of Claim 1 wherein said polyether polyol has an equivalent weight of from 700 to 3000, and an average of from 2 to 4 hydroxyl groups per molecule, and the alkylene glycol contains from 2 to 4 carbon atoms.

3. The polyether-alkylene glycol blend of Claim 2 containing from 10 to 40 parts by weight of chain extender per 100 parts by weight of the polyether polyol.

4. The polyether-alkylene glycol blend of Claim 3 containing from 0.2 to 1 part of stabilizing agent per part of chain extender.

5. The polyether-alkylene glycol blend of Claim 4 wherein said compatibilizing agent comprises an unsubstituted or ether substituted aliphatic or cycloaliphatic primary mono-amine having from 4 to about 8 carbon atoms.

6. The polyether-alkylene glycol blend of Claim 5 wherein said compatibilizing agent comprises monoamylamine or cyclohexylamine.

7. The polyether-alkylene glycol blend of Claim 6 wherein said polyether polyol contains from 10 to 25 weight percent, based on the weight of the polyether, of ethylene oxide-capping.

8. A polyurethane polymer which is the reaction product of a polyisocyanate and the polyether-alkylene glycol blend of Claim 1.

9. A polyurethane polymer which is the reaction product of a polyisocyanate and the polyether-alkylene glycol blend of Claim 7.

10. A process for preparing a compatibilized polyether-alkylene glycol blend which comprises admixing a relatively high equivalent weight polyether polyol, an $\alpha,\omega$-alkylene glycol which is incompatible with the polyether polyol at the relative proportions thereof present in the blend, and a compatibilizing amount of an amine compatibilizing agent selected from the group consisting of:

(a) unsubstituted or ether-substituted aliphatic or cycloaliphatic primary mono-amine compounds containing from 4 to 8 carbon atoms;

(b) unsubstituted or ether-substituted aliphatic or cycloaliphatic secondary mono-amine compounds containing from 6 to 12 carbon atoms;

(c) alkyl diethanol amines in which the alkyl group contains from 2 to 8 carbon atoms;

(d) dialkyl hydroxyl amines in which the alkyl groups each contain from 2 to 5 carbon atoms,

(e) trialkylamines in which each alkyl group contains from 2 to 4 carbon atoms, and

11. A process for preparing a polyurethane polymer which comprises reacting a polyisocyanate with the polyether-alkylene glycol blend as claimed in any one of Claims 1 to 9.